# FASCICULE DE BREVET EUROPEEN

(11) **EP 3 224 067 B1**
(45) Date de publication et mention de la délivrance du brevet: **12.12.2018**
(21) Numéro de dépôt: 15794905.8
(22) Date de dépôt: 13.11.2015
(51) Int. Cl.: B60H 1/32, B60H 1/00

(54) **PROCEDE DE FONCTIONNEMENT D'UN DISPOSITIF DE CONDITIONNEMENT THERMIQUE D'UN HABITACLE DE VEHICULE AUTOMOBILE ET DISPOSITIF DE MISE EN OEUVRE DU PROCEDE**
VERFAHREN ZUM BETREIBEN EINER VORRICHTUNG ZUR WÄRMEKONDITIONIERUNG EINES KRAFTFAHRZEUGINNENRAUMES UND VORRICHTUNG ZUR IMPLEMENTIERUNG DES VERFAHRENS
METHOD FOR OPERATING A DEVICE FOR THE THERMAL CONDITIONING OF A MOTOR VEHICLE INTERIOR AND DEVICE FOR IMPLEMENTING THE METHOD

(30) Priorité: 25.11.2014 FR 1461411
(43) Date de publication de la demande: 04.10.2017
(73) Titulaire: Valeo Systemes Thermiques, 78320 Le Mesnil Saint Denis (FR)
(72) Inventeur: JOVET, Bastien, CS 80517 La Verrière 78322 Le Mesnil Saint-Denis, cédex (FR); AILLOUD, Fabrice, CS 80517 La Verrière 78322 Le Mesnil Saint-Denis, cédex (FR); LADRECH, Frédéric, CS 80517 La Verrière 78322 Le Mesnil Saint-Denis, cédex (FR); PIERRES, Philippe, CS 80517 La Verrière 78322 Le Mesnil Saint-Denis, cédex (FR)
(74) Mandataire: Metz, Gaëlle
(86) Numéro de dépôt international: PCT/EP2015/076515
(87) Numéro de publication internationale: WO 2016/083154

(56) Documents cités:
- EP-A1- 1 616 733
- EP-A1- 1 995 095
- FR-A1- 2 853 722

## Description

La présente invention concerne un procédé de fonctionnement d'un dispositif de conditionnement thermique d'un habitacle de véhicule automobile et un dispositif de mise en oeuvre de ce procédé.

L'invention s'applique notamment à des dispositifs de conditionnement thermique pour véhicule automobile, c'est-à-dire des dispositifs ayant notamment pour fonction de chauffer, de refroidir, de filtrer et/ou déshumidifier l'air injecté dans l'habitacle.

Un tel dispositif comporte classiquement un circuit de fluide frigorigène comprenant un évaporateur apte à échanger de la chaleur avec un flux d'air destiné à déboucher dans l'habitacle du véhicule, et un compresseur.

Pour diminuer la consommation énergétique d'un tel dispositif, il est connu d'équiper le dispositif d'un moyen de contournement du flux d'air de l'évaporateur apte à dévier de l'évaporateur, en fonction de sa position, une partie du flux d'air. En aval de l'évaporateur, on mélange le flux d'air détourné avec le flux d'air ayant traversé l'évaporateur pour obtenir la température de consigne souhaitée.

Avec de tels moyens de contournement, il est possible de faire fonctionner le compresseur de façon cyclique avec un meilleur rendement, en particulier lorsqu'il s'agit d'un compresseur à cylindrée variable. En effet, dans ce dernier cas, on fait fonctionner le compresseur seulement de façon cyclique avec une cylindrée élevée et donc un meilleur rendement.

Cependant, avec ce type de fonctionnement, certes la consommation énergétique du dispositif est réduite, mais on constate aussi des variations cycliques de température de plusieurs degrés autour de la température de consigne. De tels variations sont perceptibles pour un utilisateur et peuvent réduire son sentiment de confort.

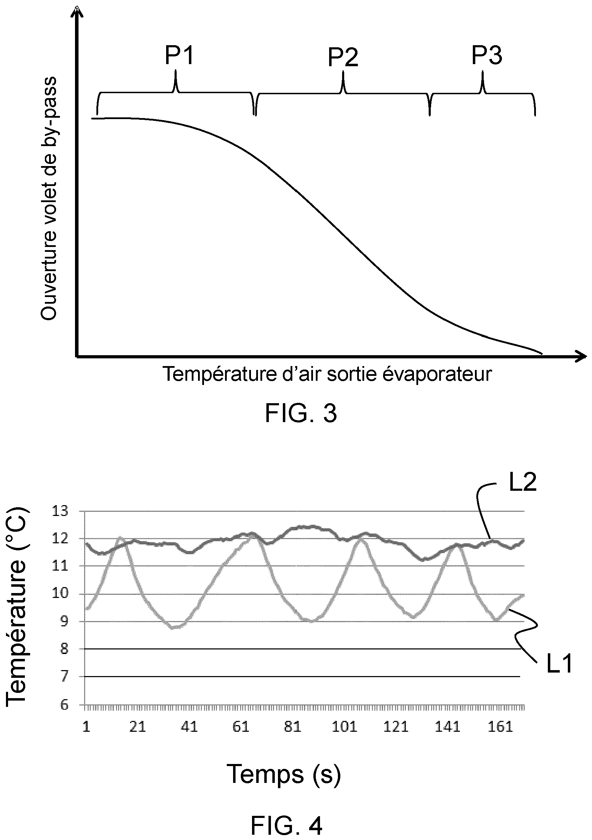

A titre d'exemple, la figure 4 montre selon une courbe L1 l'évolution dans le temps de la température en sortie d'un dispositif de conditionnement thermique selon l'état de la technique pour une température de consigne de 12°C. On constate que la température oscille entre 9°C et 12°C. Une fois la température de consigne de 12°C atteinte, le compresseur se met en marche jusqu'à atteindre une température d'environ 9°C. A ce moment, le compresseur s'arrête et la température remonte jusqu'à 12°C et le cycle recommence.

Le document EP1616733A1 divulgue un procédé et un dispositif selon le préambule des revendications 1 et 10.

La présente invention vise à optimiser le fonctionnement d'un dispositif de conditionnement thermique d'un habitacle de véhicule automobile.

A cet effet, l'invention a pour objet un procédé de fonctionnement d'un dispositif de conditionnement thermique d'un habitacle de véhicule automobile, comportant :
- un circuit de fluide frigorigène comprenant un compresseur et un échangeur de chaleur apte à former un évaporateur, l'échangeur de chaleur étant apte à échanger de la chaleur avec un flux d'air destiné à être conditionné,
- au moins un moyen de contournement apte à dévier de l'échangeur de chaleur au moins une partie dudit flux d'air et contrôlable en position entre une position de fermeture dans laquelle aucun flux n'est dévié de l'échangeur de chaleur et une multitude de positions d'ouverture dans lesquelles une partie du flux est déviée de l'échangeur de chaleur en fonction de la position d'ouverture,
- une zone de mélange du flux ayant traversé l'évaporateur et du flux d'air dévié par le moyen de contournement pour obtenir un flux d'air à une température de consigne,
dans lequel le compresseur fonctionne de façon cyclique avec en alternance une période de fonctionnement selon un premier état dans laquelle le compresseur génère avec l'échangeur de chaleur une première quantité de frigories, et une période de fonctionnement selon un second état dans laquelle le compresseur génère avec l'échangeur de chaleur une deuxième quantité de frigories inférieure à la première quantité, caractérisé en ce que la position des moyens de contournement est contrôlée de façon cyclique en accord avec les périodes de fonctionnement du compresseur.

Ainsi, la consommation du compresseur diminue tout en maintenant le confort thermique pour l'utilisateur.

L'invention peut présenter un ou plusieurs des aspects suivants pris seuls ou en combinaison :
- la position d'ouverture des moyens de contournement est contrôlée en fonction d'au moins une loi de commande préétablie en fonction de la température de sortie de l'échangeur de chaleur,
- la loi de commande est une fonction qui décroît de façon monotone,
- la loi de commande est enregistrée dans une mémoire d'une unité de contrôle (UC),
- les moyens de contournement sont contrôlés de façon cyclique entre une position ouverte et une position fermée et la durée de la période en position ouverte est plus longue que la période de fonctionnement selon le premier état du compresseur,
- la période d'ouverture des moyens de contournement est plus longue de 1 à 10 secondes, par rapport à la période de fonctionnement selon le premier état du compresseur,
- les moyens de contournement passent d'une position de fermeture à une position d'ouverture lorsque le compresseur passe d'une période de fonctionnement selon le second état à une période de fonctionnement selon le premier état,
- la température en sortie de l'échangeur de chaleur est mesurée à l'aide d'une sonde de température les positions d'ouverture et de fermeture des moyens de contournement sont contrôlées en fonction de la loi de commande et de la température mesurée,
- la sonde de température est disposée en aval de l'échangeur de chaleur de façon protégée par rapport au flux d'air provenant des moyens de contournement,
- le compresseur est un compresseur à cylindrée variable sans embrayage et le premier état de fonctionnement correspond à un fonctionnement avec une cylindrée élevée et le second état de fonctionnement correspond à un fonctionnement avec une cylindrée plus faible que dans le premier état, de préférence une cylindrée minimale,
- le compresseur est un compresseur embrayable et le premier état de fonctionnement correspond à un état embrayé du compresseur et le second état de fonctionnement correspond à un état débrayé du compresseur,
- les moyens de contournement comprennent au moins un volet de commande dont la position d'ouverture et de fermeture est ajustable.

L'invention concerne également un dispositif de conditionnement thermique d'un habitacle de véhicule automobile, comportant :
- un circuit de fluide frigorigène comprenant un compresseur et un échangeur de chaleur apte à former un évaporateur, l'échangeur de chaleur étant apte à échanger de la chaleur avec un flux d'air destiné à être conditionné,
- au moins un moyen de contournement apte à dévier de l'échangeur de chaleur au moins une partie dudit flux d'air et contrôlable en position entre une position de fermeture dans laquelle aucun flux n'est dévié de l'échangeur de chaleur et une multitude de positions d'ouverture dans lesquelles une partie de flux est déviée de l'échangeur de chaleur en fonction de la position d'ouverture,
- une zone de mélange du flux ayant traversé l'évaporateur et du flux d'air dévié par le moyen de contournement pour obtenir un flux d'air à une température de consigne,
- une unité de contrôle configurée pour faire fonctionner le compresseur de façon cyclique avec en alternance une période de fonctionnement selon un premier état dans laquelle le compresseur génère avec l'échangeur de chaleur une première quantité de frigories, et une période de fonctionnement selon un second état dans laquelle le compresseur génère avec l'échangeur de chaleur une deuxième quantité de frigories inférieure à la première quantité, caractérisé en ce que l'unité de contrôle est aussi relié aux moyens de contournement pour contrôler la position des moyens de contournement de façon cyclique en accord avec les périodes de fonctionnement du compresseur.

Le dispositif peut comporter une ou plusieurs des caractéristiques suivantes prises seules ou en combinaison :
- la position d'ouverture des moyens de contournement est contrôlée en fonction d'au moins une loi de commande préétablie en fonction de température de sortie de l'échangeur de chaleur,
- la loi de commande est une fonction qui décroît de façon monotone,
- la loi de commande est enregistrée dans une mémoire de l'unité de contrôle,
- l'unité de contrôle est configurée pour contrôler de façon cyclique les moyens de contournement entre une position ouverte et une position fermée et la durée de la période en position ouverte est plus longue que la période de fonctionnement selon le premier état du compresseur,
- la période d'ouverture des moyens de contournement est plus longue de 1 à 10 secondes, notamment 2 secondes par rapport à la période de fonctionnement selon le premier état du compresseur,
- l'unité de contrôle est configurée pour commander les moyens de contournement de passer d'une position de fermeture à une position d'ouverture lorsque le compresseur passe d'une période de fonctionnement selon le second état à une période de fonctionnement selon le premier état,
- le dispositif comprend en outre une sonde de température pour mesurer la température en sortie de l'échangeur de chaleur et l'unité de contrôle est reliée à la sonde de température et est configurée pour contrôler les positions d'ouverture et de fermeture des moyens de contournement en fonction de la loi de commande et de la température mesurée par la sonde de température.
- la sonde de température est disposée en aval de l'échangeur de chaleur de façon protégée par rapport au flux d'air provenant des moyens de contournement,
- le compresseur est un compresseur à cylindrée variable sans embrayage et le premier état de fonctionnement correspond à un fonctionnement avec une cylindrée élevée et le second état de fonctionnement correspond à un fonctionnement avec une cylindrée plus faible que dans le premier état, de préférence une cylindrée minimale,
- le compresseur est un compresseur embrayable et le premier état de fonctionnement correspond à un état embrayé du compresseur et le second état de fonctionnement correspond à un état débrayé du compresseur,
- les moyens de contournement comprennent au moins un volet de commande dont la position d'ouverture et de fermeture est ajustable par un moteur,
- l'échangeur de chaleur est un évaporateur-stockeur.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique d'un dispositif de conditionnement thermique selon un premier mode de réalisation de l'invention,
- la figure 2 est un diagramme double montrant d'une part, en partie haute, l'état de fonctionnement du compresseur et d'autre part, en partie basse, les commandes d'ouverture et de fermeture des moyens de contournement,
- la figure 3 est un diagramme schématique montrant un exemple d'une loi de commande de l'ouverture des moyens de contournement en fonction de la température de sortie de l'évaporateur,
- la figure 4 est un diagramme schématique montrant l'évolution de la température obtenue par le dispositif de l'invention en fonction du temps comparé à une évolution de température obtenue par un dispositif sans conduit de contournement de l'état de la technique,
- la figure 5 est une vue schématique d'un dispositif de conditionnement thermique selon un second mode de réalisation de l'invention.

Dans la cadre de la présente invention, on rappelle qu'une frigorie (fg) est l'inverse d'une calorie (cal) et vérifie par conséquent la relation 1 fg = - 1 cal. Alors que la calorie exprime une quantité de chaleur correspondant à 4,2 Joules, une frigorie exprime donc une quantité de froid.

Dans la présente description, on entend par « en amont » qu'un élément est placé avant un autre par rapport au sens de circulation du fluide frigorigène. A contrario, on entend par « en aval » qu'un élément est placé après un autre par rapport au sens de circulation du fluide frigorigène.

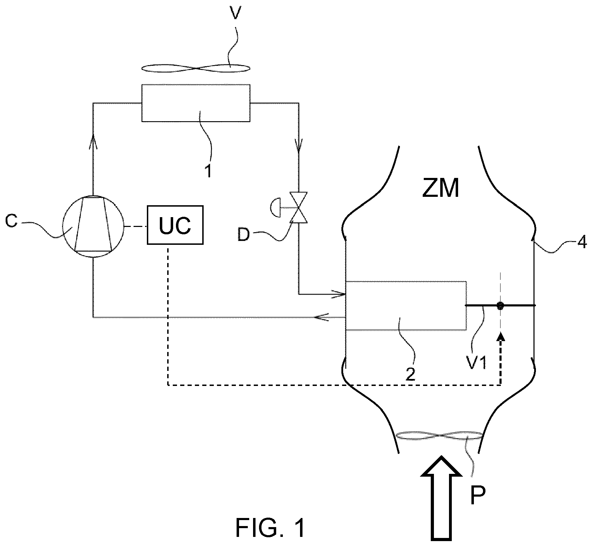

La figure 1 représente un dispositif de conditionnement thermique d'un habitacle de véhicule automobile selon un premier mode de réalisation, comportant un circuit de fluide frigorigène comprenant un premier échangeur de chaleur 1 apte à former un condenseur, et un deuxième échangeur de chaleur 2 apte à former un évaporateur.

Selon une variante, l'échangeur de chaleur 2 peut être un évaporateur simple.

Selon une autre variante, l'échangeur de chaleur 2 peut être un évaporateur -stockeur.

Un évaporateur apte à stocker des frigories, également appelé évaporateur-stockeur, est connu par exemple des documents FR 2 847 973 et FR 2 878 613. Un tel évaporateur comporte par exemple un réservoir contenant un matériau à changement de phase (également connu sous l'abréviation anglaise PCM pour « Phase-Change Material »), apte à se solidifier ou à se liquéfier. Par ce changement de phase, un tel matériau permet de stocker de l'énergie calorifique ou des frigories sous forme de chaleur latente de solidification ou de liquéfaction. Ces frigories stockées peuvent être restituées à un flux d'air, de manière à le refroidir, en particulier lorsque le compresseur est arrêté. Les matériaux à changement de phase les plus classiquement utilisés sont des paraffines, dont le point de liquéfaction est compris entre 5 °C et 12 °C.

Le circuit de fluide frigorigène comporte en outre un compresseur C, destiné à être entraîné par un moteur du véhicule, et un détendeur D.

Le compresseur est par exemple un compresseur embrayable et/ou à cylindrée variable.

Le compresseur C peut donc être selon une première variante un compresseur à cylindrée fixe comportant un embrayage. On peut donc distinguer un premier état de fonctionnement, l'état embrayé, selon lequel le compresseur fonctionne et un second état de fonctionnement, l'état débrayé, selon lequel le compresseur est à l'état arrêté.

Selon une seconde variante, le compresseur C est un compresseur à cylindrée variable sans embrayage. Dans ce cas, on distingue un premier état de fonctionnement qui correspond à un fonctionnement avec une cylindrée élevée, et donc un rendement important et un second état de fonctionnement correspondant à un fonctionnement avec une cylindrée plus faible que dans le premier état, et donc un rendement moins important. Le second état de fonctionnement correspond par exemple à un état de fonctionnement avec une cylindrée minimale.

Selon une troisième variante qui est une sorte de combinaison des deux variantes précédentes, le compresseur C est un compresseur à cylindrée variable avec embrayage. Dans ce cas, on distingue un premier état de fonctionnement qui correspond à un fonctionnement avec une cylindrée élevée, et donc un rendement important et un second état de fonctionnement correspond à un état débraye, selon lequel le compresseur est à l'état arrêté.

De préférence, un ventilateur V permet de faire circuler un flux d'air au travers du premier échangeur de chaleur 1.

Au moins un premier moyen de contournement, tel par exemple qu'un volet V1 peut être monté à proximité du deuxième échangeur de chaleur 2.

Le volet V1 est mobile entre deux positions extrêmes, à savoir une première position extrême (représentée en trait continu) dans laquelle aucun flux d'air ne peut contourner le deuxième échangeur de chaleur 2, et une seconde position extrême (représentée en traits pointillés) dans laquelle au moins une partie d'un flux d'air peut contourner le deuxième échangeur de chaleur 2.

Bien entendu, la position du volet V1 peut être ajustée par un moteur électrique, typiquement un moteur pas-à-pas afin d'atteindre selon les besoins des positions d'ouverture intermédiaires, situées entre lesdites positions extrêmes.

Le dispositif de conditionnement comprend de plus une unité de contrôle UC qui est reliée (représenté par des lignes en traits pointillés) notamment d'une part au compresseur C pour commander son état de fonctionnement et d'autre part au moteur de positionnement du volet V1 pour commander la position d'ouverture et la fermeture du volet V1.

En aval, la sortie de l'évaporateur 2 et du volet V1 sont raccordées à un canal 4 avec une zone de mélange ZM qui appartient typiquement à une l'installation de chauffage, ventilation et/ou climatisation, également appelée H.V.A.C. (Heating, Ventilation and Air-Conditioning).

L'installation de chauffage, ventilation et/ou climatisation comprend notamment un pulseur P, positionné par exemple en amont de l'évaporateur 2.

C'est par le mélange de l'air en sortie de l'évaporateur 2 d'une part et du flux en aval du volet V1 d'autre part qu'un flux d'air à une température de consigne est obtenu qui doit être envoyé dans l'habitacle pour assurer le confort thermique des utilisateurs.

Bien entendu d'autre composants d'une installation de chauffage, ventilation et / ou de climatisation peuvent être prévus en aval ou en parallèle au dispositif décrit ci-dessus sans sortir du cadre de la présente invention, notamment d'autres échangeurs de chaleur aptes à former un évaporateur ou un radiateur.

En relation avec les figures 1 à 4, il est maintenant détaillé le procédé de fonctionnement du dispositif décrit ci-dessus.

L'unité de contrôle UC est configurée pour faire fonctionner le compresseur C de façon cyclique avec en alternance une période de fonctionnement selon un premier état dans laquelle le compresseur génère avec l'évaporateur une première quantité de frigories, et une période de fonctionnement selon un second état dans laquelle le compresseur génère avec l'évaporateur une deuxième quantité de frigories inférieure à la première quantité.

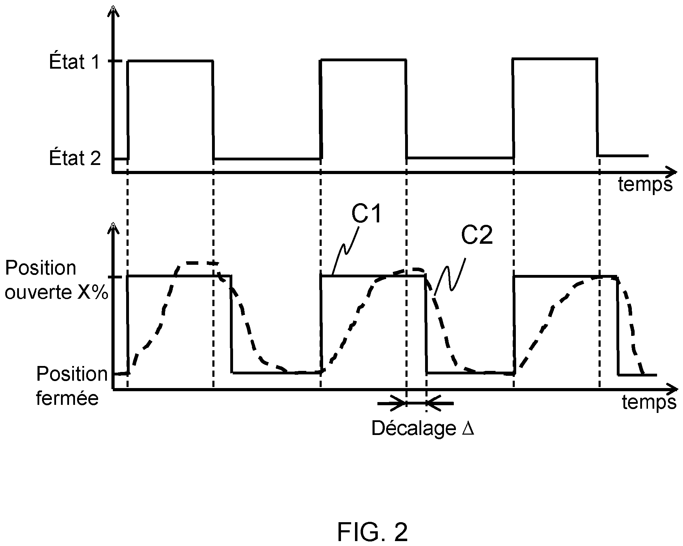

Ceci est illustré sur la partie haute de la figure 2 montrant les commandes de l'unité de contrôle UC pour faire fonctionner de façon cyclique le compresseur C selon le premier et le second état.

S'il s'agit d'un compresseur C embrayable, à cylindrée variable ou non, le second état de fonctionnement correspond à un état débrayé, le compresseur étant à l'arrêt dans ce cas. Le premier état de fonctionnement correspond à un état embrayé, de préférence avec une cylindrée élevée, voir maximale, s'il s'agit d'un compresseur à cylindrée variable.

S'il s'agit d'un compresseur C sans embrayage à cylindrée variable, le second état de fonctionnement correspond à un état de cylindrée moindre de préférence minimale. Le premier état de fonctionnement correspond à un état avec une cylindrée élevée, de préférence maximale.

Dans la partie basse de la figure 2 sont montrées un premier exemple des commandes en trait plein selon la courbe C1 de l'unité de contrôle UC pour contrôler la position des moyens de contournement, le volet V1, de façon cyclique en accord avec les périodes de fonctionnement du compresseur C.

Plus précisément, on voit que l'unité de contrôle UC contrôle de façon cyclique les moyens de contournement entre une position ouverte et une position fermée. Dans ce cas, la courbe de commandes C1 est une succession de signaux rectangulaires.

Le volet V1 passe d'une position de fermeture à une position d'ouverture lorsque le compresseur C passe d'une période de fonctionnement selon le second état à une période de fonctionnement selon le premier état.

Le degré d'ouverture du volet V1 est dans le présent exemple en % où 100% correspond à une ouverture totale (position du volet V1 en pointillé sur la figure 1) et 0% correspond à la position de fermeture du volet V1 (position du volet V1 en traits plein sur la figure 1).

Le degré ou la position d'ouverture du volet V1 est contrôlé en fonction d'au moins une loi de commande préétablie en fonction de température de sortie de l'échangeur de chaleur 2.

Un exemple d'une telle loi de commande est montré sur la figure 3 qui montre la position d'ouverture du volet V1 en fonction de la température d'air en sortie de l'évaporateur 2.

Comme on le voit sur la figure 3, la loi de commande est une fonction qui décroît de façon monotone.

Lorsque la température d'air en sortie de l'évaporateur 2 est faible, alors le volet V1 est largement ouvert. Et plus la température d'air en sortie de l'évaporateur 2 est importante, plus le volet V1 est proche de la position de fermeture.

Selon un mode de réalisation particulier, après une première partie P1 avec une pente douce s'ensuit une seconde partie P2 avec une pente forte pour se terminer selon une troisième partie P3 en une pente douce se rapprochant de façon asymptotique de la position de fermeture. On pourrait dire que cette loi de commande possède une forme qui se rapproche de la forme d'une moitié d'une gaussienne.

Cette loi de commande traduit le fait qu'avec l'augmentation de la cylindrée du compresseur pour que son rendement soit meilleur, la température d'air en sortie d'évaporateur va être plus basse. Pour compenser cette baisse de température d'air en sortie de l'évaporateur 2, il faut ouvrir le volet V1 de contournement afin de maintenir constante la température après le mélange de l'air dans la zone de mélange ZM en aval du volet V1 et de l'évaporateur 2.

Plus la cylindrée du compresseur sera élevée, plus l'air en sortie du compresseur sera froid, donc plus il faudra ouvrir le volet de contournement V1 pour que la température du mélange d'air reste constante au niveau de la consigne.

Selon un premier cas (cas de la courbe C1), le volet de contournement est asservi dans une position fermée et une position ouverte stable en fonction de la température d'air en sortie de l'évaporateur.

Selon un second cas, en variante et matérialisé sur la figure 2 par une courbe C2 en trait pointillées, le volet de contournement est asservi en temps réel en fonction de la température d'air en sortie de l'évaporateur.

Dans ces deux cas, l'ouverture du volet est déterminée par une loi tel qu'illustrée en Figure 3.

Les gains les plus importants sont obtenus avec des débits d'air contournant l'évaporateur de l'ordre de 20 à 30% du débit total d'air. On s'attachera donc à dimensionner le conduit de contournement de l'évaporateur 2 pour qu'il soit en mesure de laisser passer 20 à 30% du débit d'air arrivant dans l'HVAC.

Cette loi de commande est déterminée pour une multitude de débits d'air traversant l'HVAC et enregistrée dans une mémoire d'une unité de contrôle UC.

De plus, on constate sur la figure 2 que la durée de la période en position ouverte du volet V1 est plus longue que la période de fonctionnement selon le premier état du compresseur C. Autrement dit un certain délai ou un décalage Δ est introduit entre le basculement du compresseur C du premier état de fonctionnement vers le second état de fonctionnement d'une part et la fermeture du volet V1.

Ce décalage traduit le fait que juste après l'arrêt du compresseur C, la température en sortie de l'évaporateur 2 est encore basse et qu'il faut un certain temps, compris entre de 1s à 10s, typiquement 2s secondes par exemple, pour que la température d'air augmente en sortie de l'évaporateur 2. Dans ces conditions, on peut fermer ou amorcer la fermeture du volet V1 après l'arrêt du compresseur C par exemple avec un certain décalage.

Le temps de décalage Δ va dépendre de la charge thermique sur l'évaporateur 2. Il faut donc cartographier le temps de retard optimal par rapport à la puissance froide sur l'évaporateur 2. Ces données sont par exemple également stockées dans une mémoire de l'unité centrale UC.

Le résultat du procédé selon l'invention est montré sur la figure 4 avec la courbe L2. On constate que la température du flux d'air délivré à l'HVAC reste très proche de la température de consigne de 12°C et que les variations de température sont inférieures à 1°C, ce qui est imperceptible pour un utilisateur.

Par conséquent, le confort thermique pour l'utilisateur sera maintenu tout en bénéficiant d'un gain énergétique conséquent jusqu'à 20% en faisant fonctionner le compresseur C de façon cyclique, notamment un compresseur à cylindrée variable.

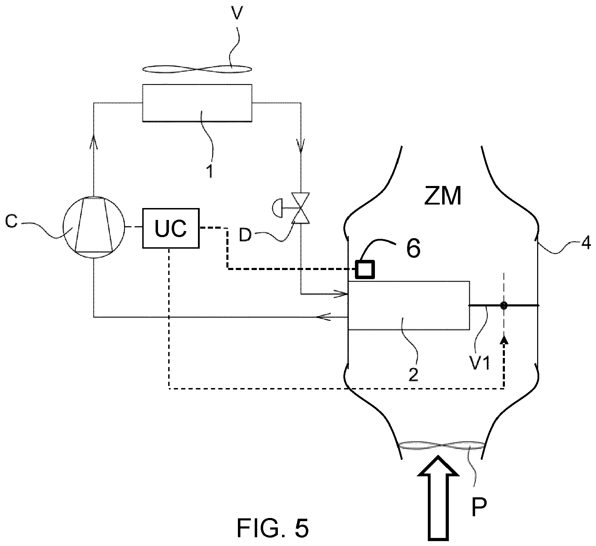

La figure 5 montre un schéma d'un dispositif de conditionnement thermique selon un second mode de réalisation de l'invention.

Ce mode de réalisation diffère de celui de la figure 1 par le fait qu'une sonde de température 6 est placée en sortie de l'échangeur de chaleur 2.

Plus précisément, la sonde de température 6 est disposée en aval de l'échangeur de chaleur de façon protégée par rapport au flux d'air provenant du volet V1.

La sonde de température 6 est reliée à l'unité de contrôle qui exploite cette température pour contrôler les positions d'ouverture et de fermeture des moyens de contournement en fonction de la loi de commande et de la température mesurée.

Pour éviter que la mesure de la sonde de température ne soit erronée, à cause de l'air plus chaud provenant du conduit de contournement par exemple, la sonde 6 est disposée par exemple derrière un cache de protection.

Le fonctionnement de cette variante est très similaire de celui du dispositif de la figure 1 à l'exception du fait que la fermeture du volet V1 est commandée en tenant compte par mesure de la sonde 6 de la remontée en température en sortie de l'évaporateur 2 et de la loi de commande.

Cette variante permet une gestion de température du flux d'air à délivrer à l'HVAC encore plus précise.

On comprend donc que la gestion également cyclique des moyens de contournement, en particulier du volet V1, permettent d'obtenir un flux d'air à une température avec moins de fluctuations autour de la température de consigne.

## Revendications

1. Procédé de fonctionnement d'un dispositif de conditionnement thermique d'un habitacle de véhicule automobile, comportant :
- un circuit de fluide frigorigène comprenant un compresseur (C) et un échangeur de chaleur (2) apte à former un évaporateur, l'échangeur de chaleur (2) étant apte à échanger de la chaleur avec un flux d'air destiné à être conditionné,
- au moins un moyen de contournement (V1) apte à dévier de l'échangeur de chaleur (2) au moins une partie dudit flux d'air et contrôlable en position entre une position de fermeture dans laquelle aucun flux n'est dévié de l'échangeur de chaleur (2) et une multitude de positions d'ouverture dans lesquelles une partie du flux est déviée de l'échangeur de chaleur (2) en fonction de la position d'ouverture,
- une zone de mélange (ZM) du flux d'air ayant traversé l'évaporateur (2) et du flux d'air dévié par le moyen de contournement (V1) pour obtenir un flux d'air à une température de consigne,
dans lequel le compresseur (C) fonctionne de façon cyclique avec en alternance une période de fonctionnement selon un premier état dans laquelle le compresseur (C) génère avec l'échangeur de chaleur (2) une première quantité de frigories, et une période de fonctionnement selon un second état dans laquelle le compresseur (C) génère avec l'échangeur de chaleur (2) une deuxième quantité de frigories inférieure à la première quantité, **caractérisé en ce que** la position des moyens de contournement (V1) est contrôlée de façon cyclique en accord avec les périodes de fonctionnement du compresseur (C).

2. Procédé selon la revendication 1, **caractérisé en ce que** la position d'ouverture des moyens de contournement (V1) est contrôlée en fonction d'au moins une loi de commande préétablie en fonction de la température de sortie de l'échangeur de chaleur (2).

3. Procédé selon la revendication 2, **caractérisé en ce que** la loi de commande est une fonction qui décroît de façon monotone.

4. Procédé selon la revendication 3, **caractérisé en ce que** la loi de commande est enregistrée dans une mémoire d'une unité de contrôle (UC).

5. Procédé selon l'une quelconque des revendications précédentes, caractérisé en ce les moyens de contournement (V1) sont contrôlés de façon cyclique entre une position ouverte et une position fermée et en ce que la durée de la période en position ouverte est plus longue que la période de fonctionnement selon le premier état du compresseur (C).

6. Procédé selon l'une quelconque des revendications 1 à 5, **caractérisé en ce que** les moyens de contournement (V1) passent d'une position de fermeture à une position d'ouverture lorsque le compresseur (C) passe d'une période de fonctionnement selon le second état à une période de fonctionnement selon le premier état.

7. Procédé selon l'une quelconque des revendications 2 à 4, **caractérisé en ce que** la température en sortie de l'échangeur de chaleur (2) est mesurée à l'aide d'une sonde de température (6) et **en ce que** les positions d'ouverture et de fermeture des moyens de contournement (V1) sont contrôlées en fonction de la loi de commande et de la température mesurée.

8. Procédé selon l'une quelconque des revendications précédentes, **caractérisé en ce que** le compresseur (C) est un compresseur à cylindrée variable sans embrayage et **en ce que** le premier état de fonctionnement correspond à un fonctionnement avec une cylindrée élevée et le second état de fonctionnement correspond à un fonctionnement avec une cylindrée plus faible que dans le premier état, de préférence une cylindrée minimale.

9. Procédé selon l'une quelconque des revendications 1 à 8, **caractérisé en ce que** le compresseur (C) est un compresseur embrayable et **en ce que** le premier état de fonctionnement correspond à un état embrayé du compresseur et le second état de fonctionnement correspond à un état débrayé du compresseur.

10. Dispositif de conditionnement thermique d'un habitacle de véhicule automobile, comportant :
- un circuit de fluide frigorigène comprenant un compresseur (C) et un échangeur de chaleur (2) apte à former un évaporateur, l'échangeur de chaleur (2) étant apte à échanger de la chaleur avec un flux d'air destiné à être conditionné,
- au moins un moyen de contournement (V1) apte à dévier de l'échangeur de chaleur (2) au moins une partie dudit flux d'air et contrôlable en position entre une position de fermeture dans laquelle aucun flux n'est dévié de l'échangeur de chaleur (2) et une multitude de positions d'ouverture dans lesquelles une partie de flux est déviée de l'échangeur de chaleur (2) en fonction de la position d'ouverture,
- une zone de mélange (ZM) du flux ayant traversé l'évaporateur et du flux d'air dévié par le moyen de contournement (V1) pour obtenir un flux d'air à une température de consigne,
- une unité de contrôle (UC) configurée pour faire fonctionner le compresseur (C) de façon cyclique avec en alternance une période de fonctionnement selon un premier état dans laquelle le compresseur (C) génère avec l'échangeur de chaleur (2) une première quantité de frigories, et une période de fonctionnement selon un second état dans laquelle le compresseur (C) génère avec l'échangeur de chaleur (2) une deuxième quantité de frigories inférieure à la première quantité, **caractérisé en ce que** l'unité de contrôle (UC) est aussi relié aux moyens de contournement pour contrôler la position des moyens de contournement (V1) de façon cyclique en accord avec les périodes de fonctionnement du compresseur (C).

11. Dispositif selon la revendication 10, **caractérisé en ce que** la position d'ouverture des moyens de contournement (V1) est contrôlée en fonction d'au moins une loi de commande préétablie en fonction de température de sortie de l'échangeur de chaleur.

12. Dispositif selon l'une quelconque des revendications 10 ou 11, caractérisé en ce l'unité de contrôle (UC) est configurée pour contrôler de façon cyclique les moyens de contournement entre une position ouverte et une position fermée et en ce que la durée de la période en position ouverte est plus longue que la période de fonctionnement selon le premier état du compresseur (C).

13. Dispositif selon l'une quelconque des revendications 10 à 12, **caractérisé en ce que** l'unité de contrôle (UC) est configurée pour commander les moyens de contournement de passer d'une position de fermeture à une position d'ouverture lorsque le compresseur (C) passe d'une période de fonctionnement selon le second état à une période de fonctionnement selon le premier état.

14. Dispositif selon l'une quelconque des revendications 10 à 13, **caractérisé en ce qu'**il comprend en outre une sonde de température (6) pour mesurer la température en sortie de l'échangeur de chaleur (2) et **en ce que** l'unité de contrôle (UC) est reliée à la sonde de température (6) et est configurée pour contrôler les positions d'ouverture et de fermeture des moyens de contournement (V1) en fonction de la loi de commande et de la température mesurée par la sonde de température (6).

15. Dispositif selon la revendication 14, **caractérisé en ce que** la sonde de température (6) est disposée en aval de l'échangeur de chaleur (2) de façon protégée par rapport au flux d'air provenant des moyens de contournement (V1).

16. Dispositif selon l'une quelconque des revendications 10 à 15, **caractérisé en ce que** le compresseur (C) est un compresseur à cylindrée variable sans embrayage et **en ce que** le premier état de fonctionnement correspond à un fonctionnement avec une cylindrée élevée et le second état de fonctionnement correspond à un fonctionnement avec une cylindrée plus faible que dans le premier état, de préférence une cylindrée minimale.

17. Dispositif selon l'une quelconque des revendications 10 à 16, **caractérisé en ce que** le compresseur (C) est un compresseur embrayable et **en ce que** le premier état de fonctionnement correspond à un état embrayé du compresseur et le second état de fonctionnement correspond à un état débrayé du compresseur (C).

18. Dispositif selon l'une quelconque des revendications 10 à 17, **caractérisé en ce que** les moyens de contournement (V1) comprennent au moins un volet de commande dont la position d'ouverture et de fermeture est ajustable par un moteur.

## Patentansprüche

1. Betriebsverfahren einer Vorrichtung zur Klimatisierung eines Kraftfahrzeug-Innenraums, die aufweist:
- einen Kältemittelkreislauf, der einen Kompressor (C) und einen Wärmetauscher (2) enthält, der einen Verdampfer bilden kann, wobei der Wärmetauscher (2) Wärme mit einem Luftstrom austauschen kann, der dazu bestimmt ist, klimatisiert zu werden,
- mindestens eine Umgehungseinrichtung (V1), die vom Wärmetauscher (2) mindestens einen Teil des Luftstroms ablenken kann und deren Stellung zwischen einer Schließstellung, in der kein Strom vom Wärmetauscher (2) abgelenkt wird, und einer Vielzahl von Öffnungsstellungen geregelt werden kann, in denen ein Teil des Stroms abhängig von der Öffnungsstellung vom Wärmetauscher (2) abgelenkt wird,
- eine Mischzone (ZM) des Luftstroms, der den Verdampfer (2) durchquert hat, und des von der Umgehungseinrichtung (V1) abgelenkten Luftstroms, um einen Luftstrom auf einer Solltemperatur zu erhalten,
wobei der Kompressor (C) zyklisch abwechselnd mit einer Betriebsperiode gemäß einem ersten Zustand, in der der Kompressor (C) mit dem Wärmetauscher (2) eine erste Menge von Frigorien erzeugt, und mit einer Betriebsperiode gemäß einem zweiten Zustand arbeitet, in der der Kompressor (C) mit dem Wärmetauscher (2) eine zweite Menge von Frigorien geringer als die erste Menge erzeugt, **dadurch gekennzeichnet, dass** die Stellung der Umgehungseinrichtungen (V1) zyklisch in Übereinstimmung mit den Betriebsperioden des Kompressors (C) geregelt wird.

2. Verfahren nach Anspruch 1, **dadurch gekennzeichnet, dass** die Öffnungsstellung der Umgehungseinrichtungen (V1) abhängig von mindestens einem abhängig von der Ausgangstemperatur des Wärmetauschers (2) vorab erstellten Steuergesetz geregelt wird.

3. Verfahren nach Anspruch 2, **dadurch gekennzeichnet, dass** das Steuergesetz eine Funktion ist, die monoton abnimmt.

4. Verfahren nach Anspruch 3, **dadurch gekennzeichnet, dass** das Steuergesetz in einem Speicher einer Regeleinheit (UC) gespeichert ist.

5. Verfahren nach einem der vorhergehenden Ansprüche, **dadurch gekennzeichnet, dass** die Umgehungseinrichtungen (V1) zyklisch zwischen einer offenen Stellung und einer geschlossenen Stellung geregelt werden, und dass die Dauer der Periode in offener Stellung länger ist als die Betriebsperiode gemäß dem ersten Zustand des Kompressors (C).

6. Verfahren nach einem der Ansprüche 1 bis 5, **dadurch gekennzeichnet, dass** die Umgehungseinrichtungen (V1) von einer Schließstellung in eine Öffnungsstellung übergehen, wenn der Kompressor (C) von einer Betriebsperiode gemäß dem zweiten Zustand in eine Betriebsperiode gemäß dem ersten Zustand übergeht.

7. Verfahren nach einem der Ansprüche 2 bis 4, **dadurch gekennzeichnet, dass** die Temperatur am Ausgang des Wärmetauschers (2) mit Hilfe eines Temperaturfühlers (6) gemessen wird, und dass die Öffnungs- und Schließstellungen der Umgehungseinrichtungen (V1) abhängig vom Steuergesetz und von der gemessenen Temperatur geregelt werden.

8. Verfahren nach einem der vorhergehenden Ansprüche, **dadurch gekennzeichnet, dass** der Kompressor (C) ein Kompressor mit variablem Hubraum ohne Kupplung ist, und dass der erste Betriebszustand einem Betrieb mit einem großen Hubraum entspricht und der zweite Betriebszustand einem Betrieb mit einem kleineren Hubraum als im ersten Zustand entspricht, vorzugsweise einem minimalen Hubraum.

9. Verfahren nach einem der Ansprüche 1 bis 8, **dadurch gekennzeichnet, dass** der Kompressor (C) ein kuppelbarer Kompressor ist, und dass der erste Betriebszustand einem eingekuppelten Zustand des Kompressors entspricht und der zweite Betriebszustand einem ausgekuppelten Zustand des Kompressors entspricht.

10. Klimatisierungsvorrichtung eines Kraftfahrzeug-Innenraums, die aufweist:
- einen Kältemittelkreislauf, der einen Kompressor (C) und einen Wärmetauscher (2) enthält, der einen Verdampfer bilden kann, wobei der Wärmetauscher (2) Wärme mit einem Luftstrom austauschen kann, der dazu bestimmt ist, klimatisiert zu werden,
- mindestens eine Umgehungseinrichtung (V1), die vom Wärmetauscher (2) mindestens einen Teil des Luftstroms ablenken kann und und deren Stellung zwischen einer Schließstellung, in der kein Strom vom Wärmetauscher (2) abgelenkt wird, und einer Vielzahl von Öffnungsstellungen geregelt werden kann, in denen ein Teil des Stroms vom Wärmetauscher (2) abhängig von der Öffnungsstellung abgelenkt wird,
- eine Mischzone (ZM) des Luftstroms, der den Verdampfer durchquert hat, und des von der Umgehungseinrichtung (V1) abgelenkten Luftstroms, um einen Luftstrom auf einer Solltemperatur zu erhalten,
- eine Regeleinheit (UC), die konfiguriert ist, den Kompressor (C) zyklisch abwechselnd mit einer Betriebsperiode gemäß einem ersten Zustand, in dem der Kompressor (C) mit dem Wärmetauscher (2) eine erste Menge von Frigorien erzeugt, und einer Betriebsperiode gemäß einem zweiten Zustand arbeiten zu lassen, in dem der Kompressor (C) mit dem Wärmetauscher (2) eine zweite Menge von Frigorien geringer als die erste Menge erzeugt,
**dadurch gekennzeichnet, dass** die Regeleinheit (UC) auch mit den Umgehungseinrichtungen verbunden ist, um die Stellung der Umgehungseinrichtungen (V1) zyklisch in Übereinstimmung mit den Betriebsperioden des Kompressors (C) zu regeln.

11. Vorrichtung nach Anspruch 10, **dadurch gekennzeichnet, dass** die Öffnungsstellung der Umgehungseinrichtungen (V1) abhängig von mindestens einem abhängig von der Ausgangstemperatur des Wärmetauschers vorab erstellten Steuergesetz geregelt wird.

12. Vorrichtung nach einem der Ansprüche 10 oder 11, **dadurch gekennzeichnet, dass** die Regeleinheit (UC) konfiguriert ist, die Umgehungseinrichtungen zyklisch zwischen einer offenen Stellung und einer geschlossenen Stellung zu regeln, und dass die Dauer der Periode in offener Stellung länger ist als die Betriebsperiode gemäß dem ersten Zustand des Kompressors (C).

13. Vorrichtung nach einem der Ansprüche 10 bis 12, **dadurch gekennzeichnet, dass** die Regeleinheit (UC) konfiguriert ist, den Umgehungseinrichtungen zu befehlen, von einer Schließstellung in eine Öffnungsstellung überzugehen, wenn der Kompressor (C) von einer Betriebsperiode gemäß dem zweiten Zustand in eine Betriebsperiode gemäß dem ersten Zustand übergeht.

14. Vorrichtung nach einem der Ansprüche 10 bis 13, **dadurch gekennzeichnet, dass** sie außerdem einen Temperaturfühler (6) enthält, um die Temperatur am Ausgang des Wärmetauschers (2) zu messen, und dass die Regeleinheit (UC) mit dem Temperaturfühler (6) verbunden und konfiguriert ist, die Öffnungs- und Schließstellungen der Umgehungseinrichtungen (V1) abhängig vom Steuergesetz und von der vom Temperaturfühler (6) gemessenen Temperatur zu regeln.

15. Vorrichtung nach Anspruch 14, **dadurch gekennzeichnet, dass** der Temperaturfühler (6) stromabwärts hinter dem Wärmetauscher (2) bezüglich des von den Umgehungseinrichtungen (V1) kommenden Luftstroms geschützt angeordnet ist.

16. Vorrichtung nach einem der Ansprüche 10 bis 15, **dadurch gekennzeichnet, dass** der Kompressor (C) ein Kompressor mit variablem Hubraum ohne Kupplung ist, und dass der erste Betriebszustand einem Betrieb mit einem großen Hubraum entspricht und der zweite Betriebszustand einem Betrieb mit einem kleineren Hubraum als im ersten Zustand entspricht, vorzugsweise einem minimalen Hubraum.

17. Vorrichtung nach einem der Ansprüche 10 bis 16, **dadurch gekennzeichnet, dass** der Kompressor (C) ein kuppelbarer Kompressor ist, und dass der erste Betriebszustand einem eingekuppelten Zustand des Kompressors und der zweite Betriebszustand einem ausgekuppelten Zustand des Kompressors (C) entspricht.

18. Vorrichtung nach einem der Ansprüche 10 bis 17, **dadurch gekennzeichnet, dass** die Umgehungseinrichtungen (V1) mindestens eine Steuerklappe enthalten, deren Öffnungs- und Schließstellung durch einen Motor einstellbar ist.

## Claims

1. Method for operating a device for the thermal conditioning of a motor vehicle interior, including:
- a refrigerant circuit comprising a compressor (C) and a heat exchanger (2) having the ability to form an evaporator, the heat exchanger (2) having the ability to exchange heat with a flow of air intended to be conditioned,
- at least one bypass means (V1) having the ability to divert from the heat exchanger (2) at least part of said flow of air and having the ability to be controlled in respect of its position between a closed position, in which no flow is diverted from the heat exchanger (2), and a multitude of open positions, in which part of the flow is diverted from the heat exchanger (2) on the basis of the open position,
- a mixing zone (ZM) for mixing the flow of air that has passed through the evaporator (2) and the flow of air diverted by the bypass means (V1) so as to obtain a flow of air at a setpoint temperature,
in which the compressor (C) operates in a cyclical manner having a period of operation in a first state, in which the compressor (C) generates together with the heat exchanger (2) a first quantity of frigories, alternating with a period of operation in a second state, in which the compressor (C) generates together with the heat exchanger (2) a second quantity of frigories lower than the first quantity, **characterized in that** the position of the bypass means (V1) is controlled in a cyclical manner consistent with the periods of operation of the compressor (C).

2. Method according to Claim 1, **characterized in that** the open position of the bypass means (V1) is controlled on the basis of at least one control law pre-established on the basis of the outlet temperature from the heat exchanger (2).

3. Method according to Claim 2, **characterized in that** the control law is a function which decreases monotonically.

4. Method according to Claim 3, **characterized in that** the control law is recorded in a memory of a control unit (UC) .

5. Method according to any one of the preceding claims, **characterized in that** the bypass means (V1) are controlled in a cyclical manner between an open position and a closed position, and **in that** the duration of the period in the open position is longer than the operating period in the first state of the compressor (C).

6. Method according to any one of Claims 1 to 5, **characterized in that** the bypass means (V1) move from a closed position to an open position when the compressor (C) moves from an operating period in the second state to an operating period in the first state.

7. Method according to any one of Claims 2 to 4, **characterized in that** the temperature at the outlet from the heat exchanger (2) is measured with the help of a temperature probe (6), and **in that** the open position and the closed position of the bypass means (V1) are controlled on the basis of the control law and the measured temperature.

8. Method according to any one of the preceding claims, **characterized in that** the compressor (C) is a clutchless variable displacement compressor, and **in that** the first operating state corresponds to an operation with a high displacement, and the second operating state corresponds to an operation with a lower displacement than in the first state, preferably a minimal displacement.

9. Method according to any one of Claims 1 to 8, **characterized in that** the compressor (C) is a clutchable compressor, and **in that** the first operating state corresponds to a clutched state of the compressor, and the second operating state corresponds to a declutched state of the compressor.

10. Device for the thermal conditioning of a motor vehicle interior, including:
- a refrigerant circuit comprising a compressor (C) and a heat exchanger (2) having the ability to form an evaporator, the heat exchanger (2) having the ability to exchange heat with a flow of air intended to be conditioned,
- at least one bypass means (V1) having the ability to divert from the heat exchanger (2) at least part of said flow of air and having the ability to be controlled in respect of its position between a closed position, in which no flow is diverted from the heat exchanger (2), and a multitude of open positions, in which part of the flow is diverted from the heat exchanger (2) on the basis of the open position,
- a mixing zone (ZM) for mixing the flow of air that has passed through the evaporator (2) and the flow of air diverted by the bypass means (V1) so as to obtain a flow of air at a setpoint temperature,
- a control unit (UC) configured in order to cause the compressor (C) to operate in a cyclical manner having a period of operation in a first state, in which the compressor (C) generates together with the heat exchanger (2) a first quantity of frigories, alternating with a period of operation in a second state, in which the compressor (C) generates together with the heat exchanger (2) a second quantity of frigories lower than the first quantity, **characterized in that** the control unit (UC) is also connected to the bypass means in order to control the position of the bypass means (V1) in a cyclical manner consistent with the periods of operation of the compressor (C).

11. Device according to Claim 10, **characterized in that** the open position of the bypass means (V1) is controlled on the basis of at least one control law pre-established on the basis of the outlet temperature from the heat exchanger.

12. Device according to any one of Claims 10 or 11, **characterized in that** the control unit (UC) is configured in order to control the bypass means in a cyclical manner between an open position and a closed position, and **in that** the duration of the period in the open position is longer than the operating period in the first state of the compressor (C).

13. Device according to any one of Claims 10 to 12, **characterized in that** the control unit (UC) is configured in order to control the bypass means to move from a closed position to an open position when the compressor (C) moves from an operating period in the second state to an operating period in the first state.

14. Device according to any one of Claims 10 to 13, **characterized in that** it comprises in addition a temperature probe (6) intended to measure the temperature at the outlet from the heat exchanger (2), and **in that** the control unit (UC) is connected to the temperature probe (6) and is configured in order to control the open and the closed positions of the bypass means (V1) on the basis of the control law and the temperature measured by the temperature probe (6).

15. Device according to Claim 14, **characterized in that** the temperature probe (6) is disposed downstream of the heat exchanger (2) in a manner that is protected in relation to the flow of air originating from the bypass means (V1).

16. Device according to any one of Claims 10 to 15, **characterized in that** the compressor (C) is a clutchless variable displacement compressor, and **in that** the first operating state corresponds to an operation with a high displacement and the second operating state corresponds to an operation with a lower displacement than in the first state, preferably a minimal displacement.

17. Device according to any one of Claims 10 to 16, **characterized in that** the compressor (C) is a clutchable compressor, and **in that** the first operating state corresponds to a clutched state of the compressor and the second operating state corresponds to a declutched state of the compressor (C).

18. Device according to any one of Claims 10 to 17, **characterized in that** the bypass means (V1) comprise at least one control valve, of which the open position and the closed position is adjustable by means of a motor.
